# EUROPÄISCHE PATENTSCHRIFT

(11) **EP 2 041 441 B1**
(45) Veröffentlichungstag und Bekanntmachung des Hinweises auf die Patenterteilung: **04.04.2012**
(21) Anmeldenummer: 07785611.0
(22) Anmeldetag: 09.07.2007
(51) Int. Cl.: F16B 13/02

(54) **AUS EINER STRANGANORDNUNG BESTEHENDER DÜBEL**
DOWEL COMPOSED OF A STRAND ARRANGEMENT
CHEVILLE CONSTITUÉE PAR UN AGENCEMENT DE BRINS

(30) Priorität: 12.07.2006 DE 102006032156
(43) Veröffentlichungstag der Anmeldung: 01.04.2009
(73) Patentinhaber: Mht Patentverwertungs-beteillgungs-und Verwaltungs GmbH, 82152 Martinsried (DE)
(72) Erfinder: GRUBER, Bruno, 82140 Olching (DE)
(74) Vertreter: Tiesmeyer, Johannes
(86) Internationale Anmeldenummer: PCT/DE2007/001213
(87) Internationale Veröffentlichungsnummer: WO 2008/006345

(56) Entgegenhaltungen:
- FR-A- 1 023 043
- GB-A- 189 711 017
- US-A- 2 308 825
- US-A- 5 456 062

## Beschreibung

Die vorliegende Erfindung betrifft einen Dübel, bestehend aus einer Stranganordnung mit mindestens einem ersten Strang, der sich entlang einer Längsachse erstreckt, und mindestens einem zweiten Strang, der sich in einem Winkel zu dem mindestens einen ersten Strang erstreckt und den mindestens einen ersten Strang an Kreuzungsstellen kreuzt, wobei der mindestens eine erste Strang und/oder der mindestens eine zweite Strang mit einem Abstand um die Längsachse gewunden ist und der mindestens eine erste Strang an den Kreuzungsstellen mit dem mindestens einen zweiten Strang verbunden ist.

Herkömmlich bekannte Dübel haben den Nachteil, dass der Durchmesser eines Bohrlochs, in das der Dübel eingesetzt werden soll, um einiges größer als der Schraubendurchmesser der einzuschraubenden Schraube sein muss. Daher ist die aufzubringende Bohrleistung zur Erzielung des Bohrlochs und die Menge des beim Bohren anfallenden Bohrmehls vergleichsweise hoch. Ferner ist für jeden Schraubendurchmesser ein entsprechender Dübel vorgesehen, so dass ein großes Sortiment an Dübeln vorrätig gehalten werden muss.

Aus der US 4,787,186 ist ein Dübel der eingangs genannten Art bekannt, welcher aus einem Flechtwerk oder Gewebe besteht, das aus einander kreuzenden Scharen von in etwa parallel zueinander verlaufenden Strängen gebildet ist. Netzlücken zwischen den Strängen dienen dazu, in den Dübel injizierten Mörtel nach außen austreten zu lassen. Es sind weitere derartige Spezialdübel mit siebartiger bzw. netzartiger Flechtstruktur oder Gewebestruktur, so z. B. aus US 2 308 825 oder EP 0 172 134 A1 bekannt. Ferner sind Dübel in Form zusammengerollter Lochbleche oder aus gebogenem Streckmetall bekannt, so z. B. aus FR 1 023 043 A oder EP 0 338 982 A2.

Der Erfindung liegt die Aufgabe zugrunde, einen standardmäßig verwendbaren Spreizdübel bereitzustellen, der auf einfache Weise preiswert herstellbar ist, vielseitig und montagefreundlich einsetzbar ist und in einem Bohrloch ausgezeichnete Befestigungseigenschaften für eine darin einzuschraubende Schraube oder dgl. bietet.

Zur Lösung dieser Aufgabe wird erfindungsgemäß vorgeschlagen, dass bei einem Dübel mit den eingangs genannten Merkmalen der mindestens eine zweite Strang auf der in Radialrichtung außen liegenden Fläche des mindestens einen ersten Strangs aufliegt, so dass der Abstand A1 des ersten Strangs von der Längsachse und der Abstand A2 des zweiten Strangs von der Längsachse unterschiedlich groß sind. Die Stranganordnung ist so ausgebildet und/oder besteht aus einem solchen Material, dass diese in einem Winkel zur Längsachse spreizbar ist.

Ein solcher Dübel hat ausgezeichnete Befestigungseigenschaften für eine darin einzuschraubende Schraube oder dgl., wobei eine gleichmäßige Verteilung des auf die Wandoberfläche eines Bohrlochs wirkenden Anpressdrucks möglich ist. Ein Dübel einer Größe kann für verschiedene Schraubendurchmesser verwendet werden. Da ein Bohrloch mit einem vergleichsweise kleinen Durchmesser ausgeführt werden kann, wird die Menge an Bohrmehl stark reduziert, wobei ferner eine geringere Leistung zum Bohren des Bohrlochs erforderlich ist und die Vorschubkraft auf den Bohrer verringert werden kann.

Gegenstand der Erfindung ist gemäß Anspruch 13 auch ein Verfahren zur Herstellung eines erfindungsgemäßen Dübels.

Weiterbildungen des Dübels nach Anspruch 1 sind in den Unteransprüchen 2 - 12 angegeben. Anspruch 14 betrifft eine Weiterbildung des Verfahrens zur Herstellung eines erfindungsgemäßen Dübels.

Die Erfindung wird anhand der Zeichnungen näher erläutert.

Darin zeigen:
- Fig. 1: eine Ansicht eines erfindungsgemäßen Dübels in einer ersten Ausführungsform der Erfindung,
- Fig. 1A: eine vergrößerte Darstellung der Ansicht von Fig. 1,
- Fig. 2: eine Draufsicht auf eine Abwicklung des Dübels entlang seiner Längsachse in einem ungestreckten Zustand,
- Fig. 3: eine Draufsicht auf eine Abwicklung des Dübels entlang seiner Längsachse in einem gestreckten Zustand,
- Fig. 4: eine Ansicht eines erfindungsgemäßen Dübels in einer zweiten Ausführungsform der Erfindung,
- Fig. 5: eine Schnittansicht einer Wand mit Bohrloch und mit in dieses eingesetztem Dübel gemäß der ersten Ausführungsform,
- Fig. 6: eine Schnittansicht einer Wand mit Bohrloch und mit in dieses eingesetztem Dübel gemäß der zweiten Ausführungs- ses eingesetztem Dübel gemäß der zweiten Ausführungsform,
- Fig. 7: eine Schnittansicht analog zu Fig. 6, wobei das Bohrloch größer als der ungestreckte Durchmesser des Dübels ist,
- Fig. 8: eine Schnittansicht einer Wand mit Bohrloch und eingesetztem Dübel, der eine Holzschraube aufnimmt,
- Fig. 9: eine Schnittansicht einer Wand mit Bohrloch und eingesetztem Dübel, der eine Nagetschraube aufnimmt,
- Fig. 10: eine Schnittansicht einer Wand mit Bohrloch und eingesetztem Dübel, der einen Stahlnagel aufnimmt, und
- Fig. 11: eine Schnittansicht einer Wand mit Bohrloch und eingesetztem Dübel, der einen mit Innengewinde versehenen Bolzen aufnimmt.

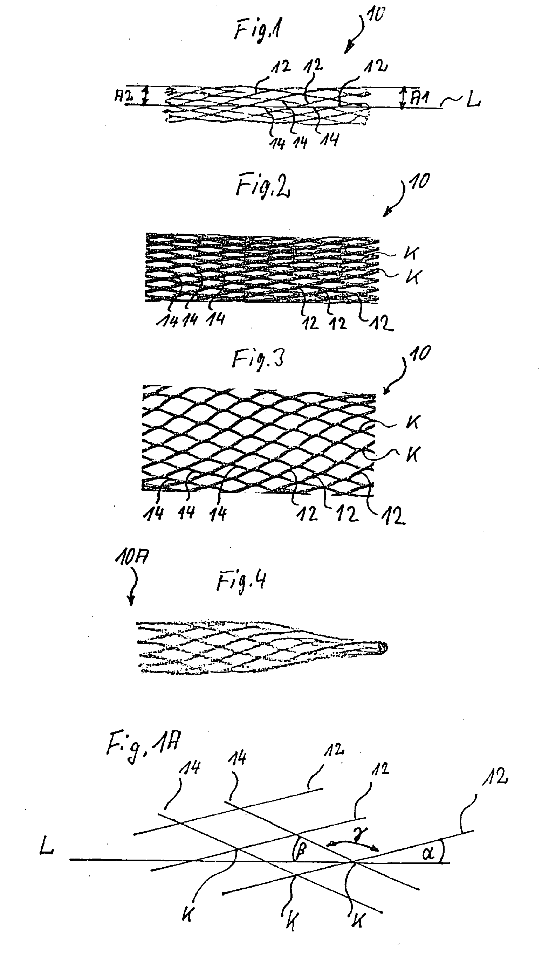

Wie in den Fig. 1 und 1A gezeigt ist, besteht ein Dübel 10 gemäß einer ersten Ausführungsform aus einer Stranganordnung, die aus einer Vielzahl von ersten Strängen 12 gebildet ist, die parallel zueinander verlaufen, mit einem radialen Abstand A1 von einer Längsachse L beabstandet sind und einem Steigungswinkel α versehen um die Längsachse L gewunden sind, und die aus einer Vielzahl von zweiten Strängen 14 gebildet ist, die parallel zueinander verlaufen, mit einem radialen Abstand A2 von der Längsachse L beabstandet sind und einem Steigungswinkel ß versehen um die Längsachse L gewunden sind.

Der Steigungswinkel α und der Steigungswinkel β haben den gleichen Betrag, verlaufen aber in einer entgegengesetzten Richtung, so dass sich Kreuzungsstellen K zwischen den ersten Strängen 12 und den zweiten Strängen 14 ergeben. An den Kreuzungsstellen K sind die ersten Stränge 12 mit den zweiten Strängen 14 verbunden und weisen einen Winkel γ zueinander auf. Da die zweiten Stränge 14 in der in Radialrichtung außen liegenden Fläche der ersten Stränge 12 aufliegen, ist der radiale Abstand A2 der zweiten Stränge 14 von der Längsachse L um die Materialdicke der ersten Stränge 12 größer als der radiale Abstand A1 der ersten Stränge 12 von der Längsachse L. In der gezeigten Ausführungsform ist der Dübel 10 in Form einer an beiden Enden offenen Hülse ausgebildet, die eine gitterförmige bzw. netzförmige Struktur hat.

In der gezeigten Ausführungsform weisen die ersten Stränge 12 und die zweiten Stränge 14 einen kreisförmigen Querschnitt mit einem Durchmesser von 1 mm auf, wobei die Steigungswinkel α und β einen spitzen Winkel, der kleiner als 45° ist, zur Längsachse L im ungestreckten Zustand des Dübels 10 (siehe Fig. 1 und 2) einnehmen. Weiterhin ergeben sich als Zwischenräume zwischen den ersten Strängen 12 und den zweiten Strängen 14 Rauten, die im ungestreckten Zustand des Dübels 10 (Fig.2) eine Länge von 4 mm und eine Breite von 2 mm haben. Im gestreckten Zustand des Dübels 10 (Fig. 3) haben die Rauten eine Länge von 4 mm und eine Breite von 4 mm. Der Winkel γ weist in der bevorzugten Ausführungsform einen stumpfen Winkel auf, so dass ein gutes Spreizvermögen der Stranganordnung quer zur Längsachse L besteht.

Die ersten Stränge 12 und die zweiten Stränge 14 bestehen in der bevorzugten Ausführungsform aus Kunststoff, z.B. aus Polypropylen, Polyäthylen, Nylon, Weich-PVC oder einem anderen Weichkunststoff. Das Material kann auch von den genannten Materialien abweichen, wobei wichtig ist, dass die Stranganordnung, die den Dübel 10 bildet, in einem Winkel zur Längsachse L (in bevorzugter Weise in einem Winkel von 90°) spreizbar ist.

Das verwendete Material für die ersten Stränge 12 und die zweiten Stränge 14 ist farbig oder durchsichtig.

Modifikationen des Dübels 10 von der gezeigten Ausführungsform sind möglich.

In einer modifizierten Ausführungsform ist nur ein erster Strang 12 um die Längsachse L mit einem Abstand A1 gewunden und weist einen Steigungswinkel α auf, und ein zweiter Strang 14 oder eine Vielzahl von zweiten Strängen 14 erstreckt sich parallel zur Längsachse L und ist beabstandet von dieser angeordnet.

In einer weiteren Modifikation erstreckt sich eine Vielzahl von ersten Strängen 12 in einem rechten Winkel zur Längsachse L und eine Vielzahl von zweiten Strängen 14 erstreckt sich parallel zur Längsachse L.

In einer anderen Modifikation nehmen die Steigungswinkel α und β einen spitzen Winkel, der gleich oder größer als 45° ist, zur Längsachse L im ungestreckten Zustand des Dübels 10 ein. In einer weiteren Modifikation sind die Steigungswinkel α und β ungleich groß.

Obwohl in der gezeigten Ausführungsform der radiale Abstand A1 der ersten Stränge 12 und der radiale Abstand A2 der zweiten Stränge 14 über die gesamte Länge des Dübels 10 konstant sind, kann sich der Abstand A1 und der Abstand A2 in einem Teilbereich der Länge des Dübels 10 oder über einen gesamten Bereich der Länge des Dübels 10 kontinuierlich verringern, so dass sich eine konische Form des Dübels 10 ergibt. In einer modifizierten Ausführungsform verringern sich die Abstände A1 und A2 in einer diskontinuierlichen Weise.

Statt eines runden Querschnitts haben in modifizierten Ausführungsformen die ersten Stränge 12 und die zweiten Stränge 14 einen quadratischen, rechteckigen oder ovalen Querschnitt oder eine andere Querschnittsform. In einer weiteren Modifikation haben die ersten Stränge 12 eine andere Querschnittsform als die zweiten Stränge 14.

In einer anderen Ausführungsform eines Dübels 10A, die in Fig. 4 gezeigt ist, sind am einen Ende der Stranganordnung die ersten Stränge 12 mit den zweiten Strängen 14 verbunden. In der bevorzugten Ausführungsform sind an einem Ende der Stranganordnung die ersten Stränge 12 mit den zweiten Strängen 14 verschweißt. Dadurch ergibt sich in einer Ausführungsform der Zustand, dass zumindest über einen Bereich der Länge des Dübels 10A sich der Abstand A1 und der Abstand A2 kontinuierlich verringern.

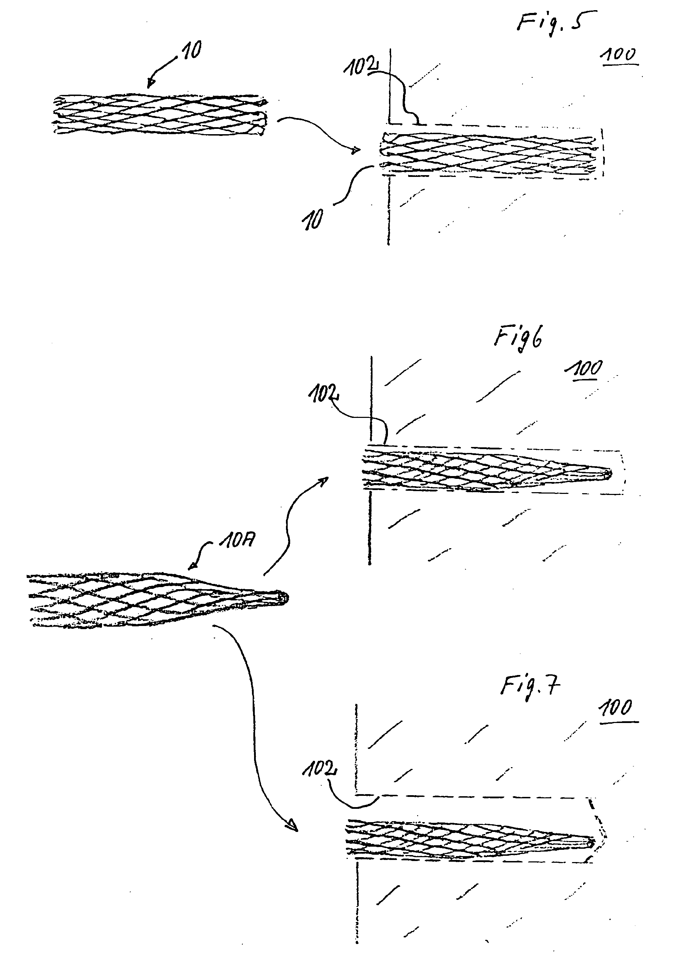

Fig. 5 zeigt, wie der Dübel 10 in einem Bohrloch 102 einer Wand 100 eingesetzt ist, wobei das Bohrloch 102 etwa den gleichen Durchmesser wie der Dübel 10 hat.

Fig. 6 zeigt, wie der Dübel 10A in einem Bohrloch 102 einer Wand 100 eingesetzt ist, wobei das Bohrloch 102 etwa den gleichen Durchmesser wie der Dübel 10A hat.

Fig. 7 zeigt, wie der Dübel 10A in einem Bohrloch 102 einer Wand 100 eingesetzt ist, wobei das Bohrloch 102 einen sehr viel größeren Durchmesser als der Dübel 10A hat (dies ist im Übrigen auch im Falle eines Dübels 10 möglich). Durch die besondere Struktur der Stranganordnung hat der Dübel 10 bzw. der Dübel 10A die Fähigkeit, sich in einem Winkel zur Längsachse L durch Einsetzen eines Befestigungselementes zu spreizen.

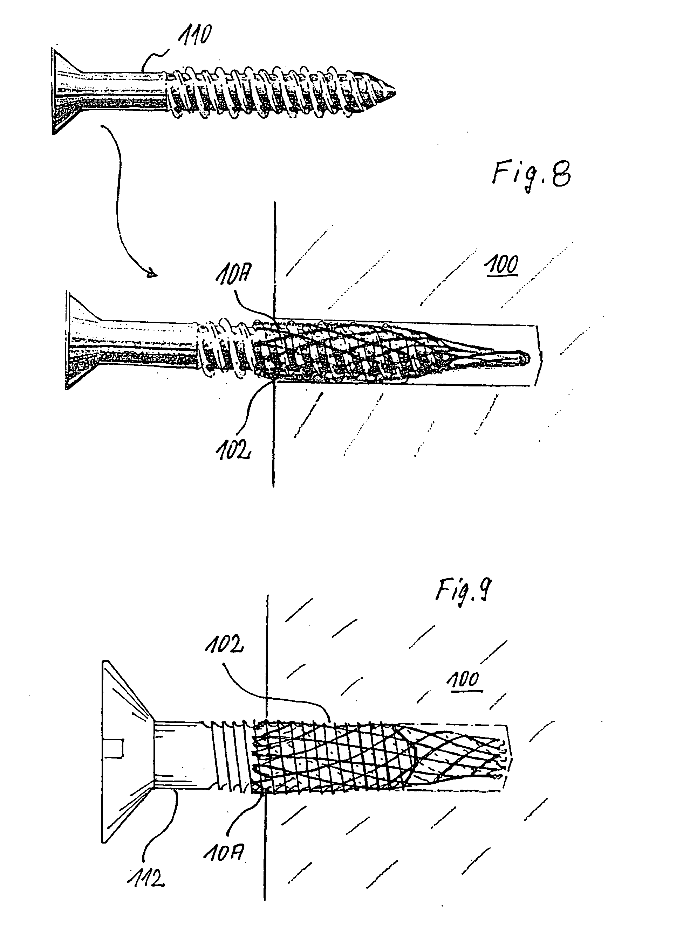

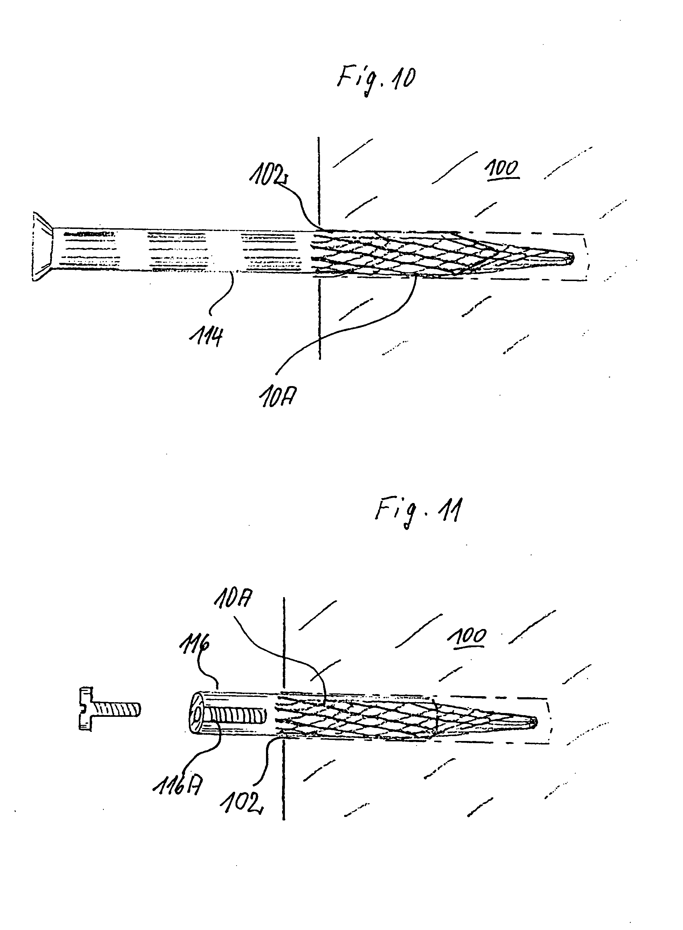

Das Befestigungselement kann eine Holzschraube 110 (siehe Fig. 8), eine Nagelschraube 112 (siehe Fig. 9), ein Stahlnagel 114 (siehe Fig. 10), ein Bolzen 116 mit Innengewinde 116A zur Aufnahme einer Schraube 118 (siehe Fig. 11) oder eine metrische Schraube sein.

Beim Einschrauben einer Schraube, wie z.B. der Holzschraube 110 oder einer nicht gezeigten Metallgewindeschraube presst sich die Stranganordnung in die Gewindekerben der Schraube, wobei sich überschüssiges Material gegen die Wandoberfläche des Bohrlochs 102 presst.

Beim Einschlagen von Stahlnägeln, wie z.B. dem Stahlnagel 114, verkrallt sich die Stranganordnung in der rauen Wand oberfläche des Bohrlochs 102, so dass der Dübel 10; 10A nicht in das Bohrloch 102 rutscht.

Der Dübel 10; 10A wird in das Bohrloch 102 eingesetzt, dann wird das Befestigungselement eingedreht oder eingeschlagen. Bei glatten Bohrlöchern kann auch der Dübel 10; 10A über das Befestigungselement gestreift werden und dann in das Bohrloch 102 eingeschlagen werden. Der Dübeldurchmesser passt sich dabei dem Durchmesser des Befestigungselements an.

In einer modifizierten Anwendung wird der Dübel 10; 10A vor dem Einstecken in das Bohrloch 102 in eine flüssige Füllmasse oder Kleber eingetaucht.

Bei dem erfindungsgemäßen Dübel 10; 10A kann der Durchmesser des Bohrlochs 102 gleich groß oder nur geringfügig größer als der Durchmesser des Befestigungselements sein. Bei porösen oder rauen Oberflächen des Bohrlochs 102 kann der Durchmesser des Bohrlochs 102 dem Durchmesser des Befestigungselements entsprechen. Bei einer glatten Oberfläche des Bohrlochs 102 beträgt z.B. bei Verwendung eines Stahlnagels 14 mit einem Durchmesser von 4,3 mm der Durchmesser des Bohrlochs 102 5 mm.

Ein besonderer Vorteil des Dübels 10; 10A besteht darin, dass der auf die Wandoberfläche des Bohrlochs 102 wirkende Anpressdruck gleichmäßig verteilt ist. Für eine Reihe von Durchmessergrößen des Bohrlochs 102, z.B. für ein 3 mm-, 4 mm-, 5 mm- und 10 mm-Bohrloch 102 kann die gleiche Dübelgröße verwendet werden.

Da das Bohrloch 102 mit einem vergleichsweise kleinen Durchmesser und genauso groß oder geringfügig größer als der Durchmesser des Dübels 10; 10A ausgeführt werden kann, wird die Menge an Bohrmehl stark reduziert, eine geringere Leistung zum Bohren des Bohrlochs 102 ist erforderlich und die Vorschubkraft auf den Bohrer kann verringert werden.

Als Stranganordnung zur Verwendung eines Dübels 10 kann ein für den Schutz eines Kabels bestimmtes extrudiertes, flexibles Gitterrohr bzw. ein netzförmiger Schlauch verwendet werden, dessen. Durchmesser dem Dübeldurchmesser entspricht und auf Länge geschnitten wird. Die Herstellung des Dübels 10A erfolgt solchermaßen, dass die Stränge des flexiblen Gitterrohrs an einem Ende zusammengeführt und verschweißt werden.

Mischformen zwischen den beschriebenen Ausführungsformen und deren Modifikationen gehören zum Schutzumfang der vorliegenden Erfindung.

## Patentansprüche

1. Dübel, bestehend aus einer Stranganordnung mit
mindestens einem ersten Strang (12), der sich entlang einer Längsachse (L) erstreckt, und
mindestens einem zweiten Strang (14), der sich in einem Winkel (γ) zu dem mindestens einen ersten Strang (12) erstreckt und den mindestens einen ersten Strang (12) an Kreuzungsstellen (K) kreuzt,
wobei der mindestens eine erste Strang (12) und/oder der mindestens eine zweite Strang (14) mit einem Abstand (A1, A2) um die Längsachse (L) gewunden ist und der mindestens eine erste Strang (12) an den Kreuzungsstellen (K) mit dem mindestens einen zweiten Strang (14) verbunden ist,
**dadurch gekennzeichnet,**
**dass** der mindestens eine zweite Strang (14) in Radialrichtung außen an dem mindestens einen ersten Strang (12) angeordnet ist, so dass der Abstand (A1) des ersten Strangs (12) von der Längsachse (L) und der Abstand (A2) des zweiten Strangs (14) von der Längsachse (L) unterschiedlich groß sind, und dass die Stranganordnung so ausgebildet ist und/oder aus einem solchen Material besteht, dass diese in einem Winkel zur Längsachse (L) spreizbar ist.

2. Dübel nach Anspruch 1, wobei die Stranganordnung eine Vielzahl von ersten Strängen (12) und/oder eine Vielzahl von zweiten Strängen (14) aufweist.

3. Dübel nach Anspruch 1, wobei ein erster Strang (12) vorgesehen ist, der mit einem Abstand (A1) um die Längsachse (L) gewunden ist, und ein zweiter Strang (14) oder eine Vielzahl von zweiten Strängen (14) sich parallel zur Längsachse (L) erstreckt.

4. Dübel nach Anspruch 2, wobei sich eine Vielzahl von ersten Strängen (12) in einem rechten Winkel zur Längsachse (L) erstreckt, und sich eine Vielzahl von zweiten Strängen (14) parallel zur Längsachse (L) und beabstandet von dieser erstreckt.

5. Dübel nach Anspruch 1 oder 2, wobei die Stranganordnung aus einer Vielzahl von ersten Strängen (12) besteht, die parallel zueinander verlaufen, mit einem radialen Abstand (A1) von der Längsachse (L) beabstandet sind und einem Steigungswinkel (α) versehen um die Längsachse (L) gewunden sind, und einer Vielzahl von zweiten Strängen (14) besteht, die parallel zueinander verlaufen, mit einem radialen Abstand (A2) von der Längsachse (L) beabstandet sind und einem Steigungswinkel (β) versehen um die Längsachse (L) gewunden sind, wobei die zweiten Stränge (14) in Radialrichtung außen an den ersten Strängen angeordnet sind.

6. Dübel nach Anspruch 5, wobei sich die ersten Stränge (12) entgegengesetzt zu einer Richtung der zweiten Stränge (14) erstrecken, so dass der Steigungswinkel (α) der ersten Stränge (12) sich entgegengesetzt zu dem Steigungswinkel (β) der zweiten Stränge (14) erstreckt.

7. Dübel nach Anspruch 6, wobei der Steigungswinkel (α) der ersten Stränge (12) und der Steigungswinkel (β) der zweiten Stränge (14) den gleichen Betrag haben.

8. Dübel nach einem der Ansprüche 6 bis 7, wobei der Steigungswinkel (α) der ersten Stränge (12) und/oder der Steigungswinkel (β) der zweiten Stränge (14) als spitzer Winkel ausgebildet sind bzw. ist, die bzw. der kleiner als 45° ist bzw. sind.

9. Dübel nach einem der Ansprüche 1 bis 8, wobei der Winkel (γ) zwischen dem mindestens einen ersten Strang (12) und dem mindestens einen zweiten Strang (14) als stumpfer Winkel ausgebildet ist.

10. Dübel nach einem der Ansprüche 1 bis 9, wobei die Stranganordnung an einem Ende geschlossen ausgebildet ist.

11. Dübel nach einem der Ansprüche 1 bis 10, wobei der Dübel (10; 10A) aus Kunststoff besteht.

12. Dübel nach einem der Ansprüche 1 bis 11, wobei der Dübel (10; 10A) aus einem für den Schutz eines Kabels bestimmten extrudierten, flexiblen Gitterrohr bzw. einem netzförmigen Schlauch hergestellt ist.

13. Verfahren zur Herstellung eines Dübels, mit folgenden Verfahrensschritten:
- Stranggießen einer schlauchförmigen Stranganordnung mit mindestens einem ersten Strang (12), der sich entlang einer Längsachse (L) erstreckt, und
mindestens einem zweiten Strang (14), der sich in einem Winkel (γ) zu dem mindestens einen ersten Strang (12) erstreckt und den mindestens einen ersten Strang (12) an Kreuzungsstellen (K) kreuzt, so dass in der schlauchförmigen Stranganordnung der mindestens eine erste Strang (12) und/oder der mindestens eine zweite Strang (14) mit einem Abstand (A1, A2) um die Längsachse (L) gewunden ist und der mindestens eine erste Strang (12) an den Kreuzungsstellen (K) mit dem mindestens einen zweiten Strang (14) verbunden ist, wobei der mindestens eine zweite Strang (14) in Radialrichtung außen an dem mindestens einen ersten Strang (12) angeordnet ist, so dass der Abstand (A1) des ersten Strangs (12) von der Längsachse (L) und der Abstand (A2) des zweiten Strangs (149 von der Längsachse (L) unterschiedlich groß sind,
- wobei die Stranganordnung dabei so ausgebildet und aus einem solchen Material gefertigt ist, dass diese in einem Winkel zur Längsachse (L) spreizbar ist,
- Schneiden der Stranganordnung auf Länge zur Bildung eines Strangstücks, das den Dübel (10) bildet, und
- Verschweißen eines Endes der Stränge (12, 14).

14. Verfahren nach Anspruch 13 mit folgendem weiteren Schritt:
Eintauchen des Dübels (10; 10A) vor der Verwendung in eine flüssige Füllmasse oder einen Kleber.

## Claims

1. Dowel composed of a strand arrangement comprising
at least one first strand (12) which extends along a longitudinal axis (L), and
at least one second strand (14) which extends at an angle (γ) to the at least one first strand (12) and intersects the at least one first strand (12) at intersection points (K),
wherein the at least one first strand (12) and/or the at least one second strand (14) is/are wound around the longitudinal axis (L) at a distance (A1, A2) and the at least one first strand (12) is connected to the at least one second strand (14) at the intersection points (K),
**characterized in that** the at least one second strand (14) is arranged on the outside of the at least one first strand (12) in the radial direction, so that the distance (A1) of the first strand (12) from the longitudinal axis (L) and the distance (A2) of the second strand (14) from the longitudinal axis (L) differ in size, and **in that** the strand arrangement is embodied in such a way and/or is made of such a material that said strand arrangement can be expanded at an angle to the longitudinal axis (L).

2. Dowel according to Claim 1, wherein the strand arrangement has a large number of first strands (12) and/or a large number of second strands (14).

3. Dowel according to Claim 1, wherein a first strand (12) is provided and is wound around the longitudinal axis (L) at a distance (A1), and a second strand (14) or a large number of second strands (14) extend(s) parallel to the longitudinal axis (L).

4. Dowel according to Claim 2, wherein a large number of first strands (12) extend at a right angle to the longitudinal axis (L), and a large number of second strands (14) extend parallel to the longitudinal axis (L) and set apart therefrom.

5. Dowel according to Claim 1 or 2, wherein the strand arrangement is composed of a large number of first strands (12) which run parallel to one another, are set apart from the longitudinal axis (L) at a radial distance (A1) and are wound around the longitudinal axis (L) so as to be provided with a pitch angle (α), and is composed of a large number of second strands (14) which run parallel to one another, are set apart from the longitudinal axis (L) at a radial distance (A2) and are wound around the longitudinal axis (L) so as to be provided with a pitch angle (β), wherein the second strands (14) are arranged on the outside of the first strands in the radial direction.

6. Dowel according to Claim 5, wherein the first strands (12) extend in opposition to a direction of the second strands (14), so that the pitch angle (α) of the first strands (12) extends in opposition to the pitch angle (β) of the second strands (14).

7. Dowel according to Claim 6, wherein the pitch angle (α) of the first strands (12) and the pitch angle (β) of the second strands (14) have the same amount.

8. Dowel according to one of Claims 6 to 7, wherein the pitch angle (α) of the first strands (12) and/or the pitch angle (β) of the second strands (14) is or are embodied as an acute angle which is less than 45°.

9. Dowel according to one of Claims 1 to 8, wherein the angle (γ) between the at least one first strand (12) and the at least one second strand (14) is embodied as an obtuse angle.

10. Dowel according to one of Claims 1 to 9, wherein the strand arrangement is embodied so as to be closed at one end.

11. Dowel according to one of Claims 1 to 10, wherein the dowel (10; 10A) is made of plastics material.

12. Dowel according to one of Claims 1 to 11, wherein the dowel (10; 10A) is made from an extruded, flexible grid pipe, which is intended for protecting a cable, or a net-like tube.

13. Method for manufacturing a dowel, including the following method steps:
- strand-casting a tubular strand arrangement having at least one first strand (12) which extends along a longitudinal axis (L), and
at least one second strand (14) which extends at an angle (γ) to the at least one first strand (12) and intersects the at least one first strand (12) at intersection points (K), so that, in the tubular strand arrangement, the at least one first strand (12) and/or the at least one second strand (14) is/are wound around the longitudinal axis (L) at a distance (A1, A2) and the at least one first strand (12) is connected to the at least one second strand (14) at the intersection points (K), wherein the at least one second strand (14) is arranged on the outside of the at least one first strand (12) in the radial direction, so that the distance (A1) of the first strand (12) from the longitudinal axis (L) and the distance (A2) of the second strand (14) from the longitudinal axis (L) differ in size,
- wherein the strand arrangement is embodied here in such a way and is made of such a material that said strand arrangement can be expanded at an angle to the longitudinal axis (L),
- cutting the strand arrangement to length to form a strand piece which forms the dowel (10), and
- welding an end of the strands (12, 14).

14. Method according to Claim 13, including the following further step:
dipping the dowel (10; 10A) prior to use into a liquid filling compound or adhesive.

## Revendications

1. Cheville constituée par un agencement de brins présentant
au moins un premier brin (12) qui s'étend le long d'un axe longitudinal (L), et
au moins un second brin (14) qui s'étend dans un angle (γ) par rapport à au moins un premier brin (12) et croise au moins un premier brin (12) au niveau de points d'intersection (K),
sachant qu'au moins un premier brin (12) et/ou au moins un second brin (14) est enroulé à une distance (A1, A2) autour de l'axe longitudinal (L) et au moins un premier brin (12) au niveau des points d'intersection (K) est relié à au moins un second brin (14),
**caractérisée en ce qu'**au moins un second brin (14) est disposé dans le sens radial à l'extérieur sur au moins un premier brin (12) de sorte que la distance (A1) entre le premier brin (12) et l'axe longitudinal (L) et la distance (A2) entre le second brin (14) et l'axe longitudinal (L) soient de grandeur différente, et **en ce que** l'agencement de brins est réalisé et/ou se compose d'un matériel tel que celui-ci puisse être écarté dans un angle par rapport à l'axe longitudinal (L).

2. Cheville selon la revendication 1, sachant que l'agencement de brins présente une pluralité de premiers brins (12) et/ou une pluralité de seconds brins (14).

3. Cheville selon la revendication 1, sachant qu'un premier brin (12) est prévu, lequel est enroulé à une distance (A1) autour de l'axe longitudinal (L) et un second brin (14) ou une pluralité de seconds brins (14) s'étend parallèlement à l'axe longitudinal (L).

4. Cheville selon la revendication 2, sachant qu'une pluralité de premiers brins (12) s'étend dans un angle droit par rapport à l'axe longitudinal (L), et une pluralité de seconds brins (14) s'étend parallèlement et à distance de l'axe longitudinal (L).

5. Cheville selon la revendication 1 ou 2, sachant que l'agencement de brins se compose d'une pluralité de premiers brins (12) qui s'étendent parallèlement les uns aux autres, sont espacés à une distance radiale (A1) de l'axe longitudinal (L) et sont enroulés autour de l'axe longitudinal (L) tout en étant pourvus d'un angle de pas (α), et se compose d'une pluralité de seconds brins (14) qui s'étendent parallèlement les uns aux autres, sont espacés à une distance radiale (A2) de l'axe longitudinal (L) et sont enroulés autour de l'axe longitudinal (L) tout en étant pourvus d'un angle de pas (β), sachant que les seconds brins (14) sont disposés dans la direction radiale à l'extérieur sur les premiers brins.

6. Cheville selon la revendication 5, sachant que les premiers brins (12) s'étendent à l'opposé d'une direction des seconds brins (14) de sorte que l'angle de pas (α) des premiers brins (12) s'étend à l'opposé de l'angle de pas (β) des seconds brins (14).

7. Cheville selon la revendication 6, sachant que l'angle de pas (α) des premiers brins (12) et l'angle de pas (β) des seconds brins (14) présentent la même valeur.

8. Cheville selon l'une quelconque des revendications 6 à 7, sachant que l'angle de pas (α) des premiers brins (12) et/ou l'angle de pas (β) des seconds brins (14) est réalisé comme un angle aigu inférieur à 45°.

9. Cheville selon l'une quelconque des revendications 1 à 8, sachant que l'angle (γ) entre au moins un premier brin (12) et au moins un second brin (14) est réalisé comme un angle obtus.

10. Cheville selon l'une quelconque des revendications 1 à 9, sachant que l'agencement des brins est réalisé fermé sur une extrémité.

11. Cheville selon l'une quelconque des revendications 1 à 10, sachant que la cheville (10 ; 10A) se compose de plastique.

12. Cheville selon l'une quelconque des revendications 1 à 11, sachant que la cheville (10 ; 10A) est fabriquée dans un tube en grillage flexible, extrudé, destiné à la protection d'un câble ou dans un tuyau réticulaire.

13. Procédé de fabrication d'une cheville comportant les étapes de procédé suivantes :
- coulage continu d'un agencement de brins tubulaire avec au moins un premier brin (12) qui s'étend le long d'un axe longitudinal (L), et
- au moins un second brin (14) qui s'étend dans un angle (γ) par rapport à au moins un premier brin (12) et croise au moins un premier brin (12) au niveau de points d'intersection (K) de sorte que dans l'agencement de brins tubulaire, au moins un premier brin (12) et/ou au moins un second brin (14) soit enroulé autour de l'axe longitudinal (L) à une distance (A1, A2) et au moins un premier brin (12) au niveau des points d'intersection (K) est relié à au moins un second brin (14), sachant qu'au moins un second brin (14) est disposé à l'extérieur dans le sens radial sur au moins un premier brin (12) de sorte que la distance (A1) entre le premier brin (12) et l'axe longitudinal (L) et la distance (A2) entre le second brin (14) et l'axe longitudinal (L) soient de grandeur différente,
- sachant que l'agencement de brins est réalisé et est fabriqué en un matériau tel que celui-ci puisse être écarté dans un angle par rapport à l'axe longitudinal (L),
- découpe de l'agencement de brins à la longueur nécessaire à la formation d'un morceau de brin qui forme la cheville (10), et
- soudure d'une extrémité des brins (12, 14).

14. Procédé selon la revendication 13, comportant l'autre étape suivante :
plongée de la cheville (10 ; 10A) avant utilisation dans une masse de remplissage liquide ou une colle.
